(19) Europäisches Patentamt
European Patent Office
Office européen des brevets

(11) Veröffentlichungsnummer: **0 443 412 B1**

# (12) EUROPÄISCHE PATENTSCHRIFT

(45) Veröffentlichungstag der Patentschrift: **30.11.94**

(51) Int. Cl.$^{5}$: **A01N 55/00**

(21) Anmeldenummer: **91101928.9**

(22) Anmeldetag: **12.02.91**

## (54) Hochkonzentrierte emulgierbare Konzentrate von Neophanen und Azaneophanen zur Anwendung im Pflanzenschutz.

(30) Priorität: **17.02.90 DE 4005153**

(43) Veröffentlichungstag der Anmeldung:
**28.08.91 Patentblatt 91/35**

(45) Bekanntmachung des Hinweises auf die Patenterteilung:
**30.11.94 Patentblatt 94/48**

(84) Benannte Vertragsstaaten:
**AT BE CH DE DK ES FR GB GR IT LI NL**

(56) Entgegenhaltungen:
**EP-A- 0 202 893**
**EP-A- 0 249 015**
**EP-A- 0 336 199**
**US-A- 4 804 653**
**EP-A- 0 224 024**
**EP-A- 0 302 701**
**DE-A- 3 604 781**

(73) Patentinhaber: **Hoechst Schering AgrEvo GmbH**
**Gerichtstrasse 27**
**D-13342 Berlin (DE)**

(72) Erfinder: **Röchling, Hans Dr.**
**Geierfeld 25**
**W-6232 Bad Soden im Taunus (DE)**

EP 0 443 412 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind hochkonzentrierte emulgierbare Konzentrate von Verbindungen der Formel I

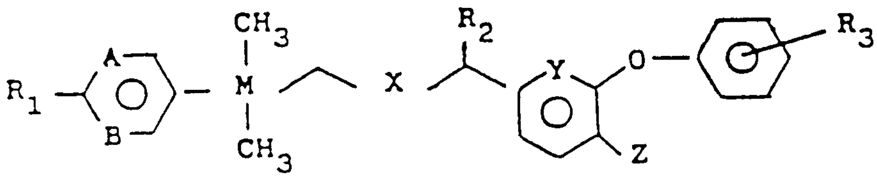

(I),

worin

- A, B = unabhängig voneinander CH, $CR_4$, N,
- X = $CH_2$, O, S,
- Y = CH, N,
- Z = H, F,
- $R_1$,$R_4$ = unabhängig voneinander H, Halogen, $(C_1$-$C_3)$-Alkyl, $(C_1$-$C_3)$-Halogenalkyl, $(C_1$-$C_3)$-Alkoxy, $(C_1$-$C_3)$-Halogenalkoxy, $(C_1$-$C_4)$-Alkylthio, $(C_1$-$C_4)$-Halogenalkylthio oder $R_1$ und $R_4$ zusammen = $-CH_2-O-CH_2-$ ;
- $R_2$ = H, $(C_1$-$C_3)$-Alkyl, Ethinyl, Vinyl, Halogen, Cyano,
- $R_3$ = H, Halogen, $(C_1$-$C_4)$-Alkyl, $(C_1$-$C_3)$-Alkoxy und
- M = C oder Si bedeuten,

die dadurch gekennzeichnet sind, daß diese 60-90 Gew.-% einer Verbindung der Formel I und eine Kombination aus einem anionaktiven und einem nichtionogenen Emulgatoren mit einem $(C_2$-$C_{16})$-Alkanol enthalten.

Alkyl als auch Alkohol beinhalten sowohl einen geradkettigen als auch einen verzweigten Alkylrest.

Bevorzugt bedeuten A, B = CH oder N, X = $CH_2$, $R_1$ = $(C_1$-$C_3)$-Alkoxy, $R_2$ = H, $R_3$ = H oder F und M = Si.

Insbesondere bevorzugt unter den Verbindungen der Formel I ist diejenige, bei der M = Si, $R_1$ = Ethoxy, A,B = CH, X = $CH_2$, $R_2$ = H, Y = CH, Z = F und $R_3$ = H bedeuten (Ia).

Wirkstoffe aus der Gruppe der Neophane und Azaneophane (I) eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam (EP-A 0 224 024, EP-A 0 249 015, EP-A 0 288 810). In diesen Dokumenten sind auch die üblichen Formulierungstypen für Insektizide oder Akarizide beschrieben.

Aus der EP-A-0 302 701 sind Öl-in-Wasser-Mikroemulsionen von Isothiazolonen bekannt, die einen anionischen grenzflächenaktiven Stoff und einen weiteren grenzflächenaktiven Stoff, wie z.B. ein $(C_4$-$C_{10})$-Alkanol enthalten.

In der DE-A-36 04 781 werden u.a. Zubereitungen beschrieben, die einen Wirkstoff vom Silan-Typ, Isophoron und eine Emulgatorkombination aus Calciumdodecylbenzolsulfonat und Fettalkoholpolyglykolether enthalten.

Neophane und Azaneophane können ohne größere Schwierigkeiten mit einer Kombination von anionaktiven und nichtionogenen Emulgatoren unter Verwendung üblicher Lösungsmittel, wie z.B. alkylierten Benzolen oder Alkylnaphthalinen zu 10 bis 70 %igen emulgierbaren Konzentraten formuliert werden, die eine gute spontane Emulgierfähigkeit in Wasser aufweisen. Bei höherprozentigen, insbesondere den 70 bis 85 %igen, Formulierungen der als dickflüssige Öle vorliegenden Neophane und Azaneophane (I), lassen sich jedoch auch unter Verwendung verschiedenster Lösungsmiztel und Emulgatorkombinationen keine Konzentrate mit ausreichend guter spontaner Emulgierfähigkeit in Wasser auffinden.

So konnten bei Verwendung einer Mischung von Phenylsulfonat-Ca mit ®Emulsogen EL 360 und ®Sapogenat T 200 bzw. den Phenylsulfonat-Ca mit Hoe S 3510 und ®Solvesso 200 (Exxon Chemicals) als Lösungsmittel spontan emulgierende Konzentrate der Neophane und Azaneophane I nur dann hergestellt werden, wenn Wirkstoff-Konzentrationen bis zu 40 % eingehalten wurden.

Dieselben Emulgator/Lösungsmittel-Kombinationen zeigten beim Einsatz in höherprozentigen, insbesondere 75 bis 85%igen emulgierbaren Konzentraten keine ausreichende spontane Emulgierfähigkeit in

Wasser. Nach intensivem Vermischen (starkes Schütteln bzw. längeres, intensives Rühren) konnte zwar eine gute Emulsionsstabilität erreicht werden, Jedoch werden von der Praxis und auch von den internationalen Prüfbestimmungen (CIPAC, WHO etc.) schnell und ohne erheblichen mechanischen Aufwand in Wasser emulgierende Präparate gefordert.

Die Erhöhung des Mengenanteils der Emulgatormischung oder die Verwendung anderer, bewährter Emulgator-Kombinationen oder anderer Lösungsmittel brachte keine Verbesserung (Tab. I).

Tabelle I (Angaben in Gew.-%)

| Gehalt Verbindg. Ia % | Phenyl-sulfonat-Ca % 1) | Emulsogen EL % 2) | Sapogenat T 200 % 3) | Hoe S 3510 % 4) | Emulsogen EL 9,5 % 5) | Lösungs-mittel % | Spontane Emulgier-fähigkeit |
|---|---|---|---|---|---|---|---|
| 19,6 | 4,3 | 7,5 | 2,9 | | | 65,7 Solvesso 200 | 1 |
| 19,8 | 4,2 | | | 3,7 | | 72,3 Solvesso 200 | 1-2 |
| 39,0 | 5,6 | | | 6,0 | | 49,4 Solvesso 200 | 1-2 |
| 80,0 | 3,0 | | | 7,0 | | 10,0 Solvesso 200 | 4 |
| 80,0 | 3,3 | | | 7,6 | | 9,1 Solvesso 200 | 4 |
| 80,0 | 3,9 | 2,0 | | 7,0 | | 7,1 Solvesso 200 | 4-5 |
| 80,0 | 3,8 | | | 8,6 | | 7,6 Solvesso 200 | 4 |
| 85,0 | 3,0 | | | 7,0 | | 5,0 Solvesso 200 | 4-5 |

| Gehalt Verbindg. Ia % | Phenylsulfonat-Ca % 1) | Emulsogen EL % (2) | Sapogenat T 200 % (3) | Hoe S 3510 % 4) | Emulsogen EL 9,5 % 5) | Lösungsmittel % | Spontane Emulgierfähigkeit |
|---|---|---|---|---|---|---|---|
| 80,0 | 3,0 | | | 7,0 | | 10,0 N-Methylpyrrolidon | 4 |
| 80,0 | 3,3 | | | 7,7 | | 9,0 N-Methylpyrrolidon | 4 |
| 82,0 | 3,6 | | | 8,4 | | 6,0 N-Methylpyrrolidon | 4-5 |
| 75,0 | 3,6 | | | 8,4 | | 13,0 N-Methylpyrrolidon | 4 |
| 80,0 | 3,9 | | | 7,0 | 2,0 | 7,1 N-Methylpyrrolidon | 4 |
| 85,0 | 3,9 | | | 7,0 | 2,0 | 2,1 N-Methylpyrrolidon | 4-5 |
| 85,0 | 3,8 | | | 8,7 | | 2,5 N-Methylpyrrolidon | 4 |
| 80,0 | 3,8 | | | 8,7 | | 7,5 N-Methylpyrrolidon | 4 |
| 80,0 | 3,0 | | | 7,0 | | 10,0 Triacetin | 4-5 |
| 80,0 | 3,8 | | | 8,7 | | 7,5 Triacetin | 4 |
| 85,0 | 3,8 | | | 8,7 | | 2,5 Triacetin | 4-5 |

1) Phenylsulfonat Ca, Firma Hoechst AG, Calzium-Salz einer Alkylarylsulfosäure (Dodecylbenzolsulfonsäure)

2) ® Emulsogen EL, Firma Hoechst AG, Fettsäurepolyglykolester, nichtionisch (36 Mol Ethylenoxid (EO)).

3) ® Sapogenat T 200, Firma Hoechst AG, Tributylphenolpolyglykolether mit 20 Mol EO.

4) Hoe S 3510, Firma Hoechst AG, Blockoxalkylat, nichtionisch.

5) ® Emulsogen EL 9,5, Firma Hoechst AG.

Die Bewertungsziffern 1-5 haben folgende Bedeutung:
1 - sehr gute spontane Emulgierbarkeit
2 - gute spontane Emulgierbarkeit
3 - ausreichende spontane Emulgierbarkeit
4 - mäßig bis schlechte spontane Emulgierbarkeit
5 - nicht ausreichende spontane Emulgierbarkeit

Dabei hätten solche hochkonzentrierten, emulgierbaren Konzentrate gegenüber den üblichen emulgierbaren Konzentraten mit ca. 10-50 % Wirkstoffanteil verschiedene ökologische als auch ökonomische Vorteile:

- hoher Flammpunkt,
- geringer Lösungsmittelanteil und damit günstige toxikologische Eigenschaften für Anwender und Umwelt sowie
- hohe Wirtschaftlichkeit, da für die gleiche Wirkstoffmenge geringere Versand- und Verpackungskosten entstehen.

Es wurde nun überraschenderweise gefunden, daß bei Verwendung einer Kombination von anionaktiven und nichtionogenen Emulgatoren mit Alkoholen als Lösungsmittel hochkonzentrierte, emulgierbare Konzentrate der Verbindungen I, insbesondere der Verbindung Ia, erhalten werden können, die neben einer sehr guten spontanen Emulgierbarkeit auch eine sehr hohe Emulsionsstabilität aufweisen.

Die erfindungsgemäßen Formulierungen enthalten die Wirkstoffe der allgemeinen Formel I zu 60-90 Gew.-%, insbesondere 70 bis einschließlich 85 Gew.-%.

Als anionaktive Emulgatoren können verwandt werden: Salze der Dodecylbenzolsulfonsäure, Salze der gegebenenfalls chlorierten ($C_{13}$-$C_{18}$)-Alkansulfonsäuren, ferner Emulgatoren aus der Gruppe der ($C_{10}$-$C_{16}$)-Alkylmono-bis-hexaglykol-ethersulfatsalze und der $\alpha$-($C_{14}$-$C_{19}$)-Alkenolsulfat-Salze. Insbesondere ist es günstig, die Salze der Dodecylbenzolsulfonsäure einzusetzen. Der Begriff Salze steht für Alkali-, Erdalkali- oder Ammoniumsalze, insbesondere für Na- oder Ca-Salze. Die erfindungsgemäßen Formulierungen enthalten die anionaktiven Emulgatoren zu 2-4 Gew.-%, bevorzugt 2,5-3,5 Gew.-%.

Als nichtionogene Emulgatoren können verwandt werden: Rizinusöloxethylate mit 9 bis 40 Mol Ethylenoxid (EO); ($C_{16}$-$C_{20}$)-Alkanole, die mit 1 bis 15 Mol Propylenoxid und anschließend mit 1 bis 30 Mol Ethylenoxid umgesetzt wurden; Polymerisationsprodukte aus Propylenoxid und Ethylenoxid mit einem Gehalt von 10 bis 80 Gew.-% Ethylenoxid und 20 bis 90 Gew.-% Propylenoxid; n-Butanol-Propylenoxid-Ethylenoxid-Block-oxalkylate; Xylenol-oxethylate mit 3 bis 5 Mol Ethylenoxid; ethoxylierte ($C_8$-$C_{12}$)-Alkylphenole oder propoxylierte und ethoxylierte Tributylphenole. Die genannten ethoxylierten Alkylphenole enthalten vorzugsweise 8 bis 12 Mol Ethylenoxid. Unter propoxylierten und ethoxylierten Tributylphenolen sind insbesondere solche zu verstehen, die durch Umsetzung von Tributylphenolen mit 8 bis 12 Mol Propylenoxid und anschließend mit 1 bis 30 Mol Ethylenoxid erhalten werden. Das n-Butanol-Propylenoxid-Ethylenoxid-Blockoxalkylat kann zu 1 - 3 Gew.-% aus n-Butanol, zu 40 - 50 Gew.-% aus Propylenoxid und zu 50 - 60 Gew.-% aus Ethylenoxid bestehen. Bevorzugt besteht es aus 2 Gew.-% n-Butanol, 44 Gew.-% Propylenoxid und zu 54 Gew.-% aus Ethylenoxid (Hoe S 3510, Firma Hoechst AG).

Diese nichtionogenen Emulgatoren sind in den erfindungsgemäßen Formulierungen zu 4-10 Gew.-%, insbesondere 6-8 Gew.-% enthalten.

Auch Mischungen verschiedener anionaktiver und nichtionogener Emulgatoren können erfindungsgemäß benutzt werden.

Besonders bevorzugter Kombinationspartner für die Salze der Dodecylbenzolsulfonsäure sind die n-Butanol-Propylenoxid-Ethylenoxid-Block-oxalkylate (z.B. Hoe S 3510).

Bei den erfindungsgemäß verwendbaren Alkoholen (Lösungsmittel) handelt es sich sowohl um kurzkettige ($C_2$-$C_3$)-Alkanole als auch um langkettige ($C_4$-$C_{16}$)-Alkanole. Wegen des höheren Siedepunktes und Flammpunktes werden bevorzugt ($C_4$-$C_{12}$)-Alkanole, insbesondere n-Hexanol, eingesetzt. Auch Mischungen verschiedener Alkohole erfüllen den erfindungsgemäßen Zweck. Die Alkohole sind zu 2-20 Gew.-%, insbesondere 4-15 Gew.-%, in den fertigen Formulierungen enthalten.

Besonders bevorzugt zur Herstellung von hochkonzentrierten emulgierbaren Konzentraten von Verbindungen der Formel I (Ia) ist die Kombination eines Calciumsalzes der Dodecylbenzolsulfonsäure mit einem n-Butanol-Propylenoxid-Ethylenoxid-Block-oxalkylat und n-Hexanol.

Bei den genannten Formulierungshilfsstoffen handelt es sich um dem Fachmann hinreichend bekannte Substanzen, die in der Literatur beschrieben sind (vgl. Winnacker-Küchler, "Chemische Technologie", Band 7, C. Hauser Verlag München, 4. Aufl. 1986; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976).

Beispiele für erfindungsgemäße Formulierungen sind in der nachfolgenden Tabelle II zusammengefaßt:

Tabelle II (Angaben in Gew.-%)

| Gehalt Verbindg. Ia % | Phenyl-sulfonat-Ca % 1) | Hoe S 3510 % 4) | Emulsogen EL 9,5 % 5) | Lösungs-mittel % | Spontane Emulgier-fähigkeit |
|---|---|---|---|---|---|
| 80,0 | 3,0 | 7,0 | | 10,0 n-Butanol | 3 |
| 85,0 | 3,0 | 7,0 | | 5,0 n-Butanol | 3-4 |
| 80,0 | 3,0 | 7,0 | | 10,0 Isobutanol | 3 |
| 85,0 | 3,0 | 7,0 | | 5,0 Isobutanol | 3 |
| 80,0 | 2,9 | 7,1 | | 10,0 2-Ethylhexanol | 2-3 |
| | | | | | |
| 80,0 | 3,0 | 7,0 | | 10,0 n-Pentanol | 2-3 |
| 80,0 | 3,0 | 7,0 | | 10,0 n-Hexanol | 2 |
| 85,0 | 3,0 | 7,0 | | 5,0 n-Hexanol | 2 |
| 80,0 | 3,3 | 7,0 | 2,00 | 7,7 n-Hexanol | 2-3 |
| 80,0 | 3,3 | 7,7 | | 9,0 n-Hexanol | 2 |
| 80,0 | 2,8 | 6,6 | | 10,6 n-Hexanol | 1-2 |
| 85,0 | 2,9 | 6,7 | | 5,4 n-Hexanol | 1-2 |
| 82,0 | 2,9 | 6,7 | | 8,4 n-Hexanol | 1 |
| 78,0 | 2,8 | 6,6 | | 12,6 n-Hexanol | 1 |

Die in den Tabellen I und II aufgeführen emulgierbaren Konzentrate wurden nach der üblichen Methode, d.h. durch einfaches Mischen der Ausgangskomponenten in einem Rührkolben, hergestellt (vgl. Winnacker-Küchler, "Chemische Technologie").

Die Erfindung wird durch die nachfolgenden Herstellungsbeispiele erläutert:
Die einzelnen Komponenten werden im Rührkolben gemischt.

I.

85,00 Gew.-% einer Verbindung der Formel I
3,00 Gew.-% Phenylsulfonat-Ca [1)]
7,00 Gew.-% Hoe S 3510 [4)]
5,00 Gew.-% Isobutanol

Man homogenisiert das Gemisch durch etwa 1stündiges Rühren. Danach erhält man eine klare Lösung, die bei 2 %iger Verdünnung in CIPAC-Standard-Wasser D (CIPAC Handbook Vol. I (1970), S. 878) von 30 °C eine ausreichende spontane Emulgierbarkeit aufweist. (Bewertungsziffer 3)

II.

80,00 Gew.-% einer Verbindung der Formel I
2,90 Gew.-% Phenylsulfonat Ca [1)]
7,10 Gew.-% Hoe S 3510 [4)]
10,00 Gew.-% 2-Ethylhexanol

werden wie unter I beschrieben bis zum Erhalt einer klaren Lösung homogenisiert.
Bei Herstellung einer 5 %igen Spritzbrühe in CIPAC Standard-Wasser D von 30 °C wird eine gute bis ausreichende spontane Emulgierbarkeit beobachtet. (Bewertungsziffer 2 - 3)

III.

82,00 Gew.-% einer Verbindung der Formel I
2,90 Gew.-% Phenylsulfonat Ca [1)]
6,70 Gew.-% Hoe S 3510 [4)]
8,40 Gew.-% n-Hexanol

werden, wie unter I beschrieben bis zum Erhalt einer klaren Lösung homogenisiert.
Bei 2 bis 5 %iger Anwendung in CIPAC-Standard-Wasser D von 30 °C wird eine sehr gute spontane Emulgierbarkeit beobachtet. (Bewertungsziffer 1)

**Patentansprüche**

**Patentansprüche für folgende Vertragsstaaten : AT, BE, CH, DE, DK, FR, GB, GR, IT, LI, NL**

**1.** Emulgierbare Konzentrate von Verbindungen der allgemeinen Formel I

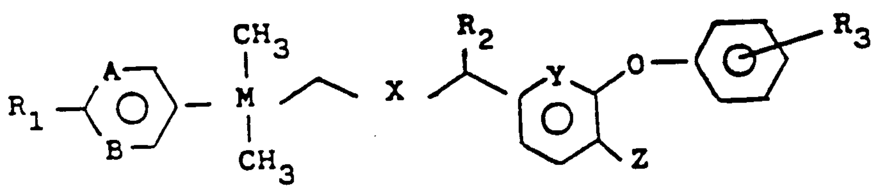

(I),

worin

| | |
|---|---|
| A, B | = unabhängig voneinander CH, $CR_4$, N, |
| X | = $CH_2$, O, S, |
| Y | = CH, N, |
| Z | = H, F, |
| $R_1$,$R_4$ | = unabhängig voneinander H, Halogen, ($C_1$-$C_3$)-Alkyl, ($C_1$-$C_3$)-Halogenalkyl, ($C_1$-$C_3$)-Alkoxy, ($C_1$-$C_3$)-Halogenalkoxy, ($C_1$-$C_4$)-Alkylthio, ($C_1$-$C_4$)-Halogenalkylthio oder $R_1$ und $R_4$ zusammen = $-CH_2-O-CH_2-$ ; |
| $R_2$ | = H, ($C_1$-$C_3$)-Alkyl, Ethinyl, Vinyl, Halogen, Cyano, |
| $R_3$ | = H, Halogen, ($C_1$-$C_4$)-Alkyl, ($C_1$-$C_3$)-Alkoxy und |
| M | = C oder Si bedeuten, |

dadurch gekennzeichnet, daß diese 60-90 Gew.-% einer Verbindung der Formel I und eine Kombination aus einem anionaktiven und einem nichtionogenen Emulgatoren mit einem ($C_2$-$C_{16}$)-Alkanol enthalten.

**2.** Emulgierbare Konzentrate gemäß Anspruch 1, dadurch gekennzeichnet, daß in Formel I A, B = CH oder N, X = $CH_2$, $R_1$ = ($C_1$-$C_3$)-Alkoxy, $R_2$ = H, $R_3$ = H oder F und M = Si bedeuten.

3. Emulgierbare Konzentrate gemäß Anspruch 1 oder 2, dadurch gekennzeichnet, daß in Formel I M = Si, $R_1$ = Ethoxy, A,B = CH, X = $CH_2$, $R_2$ = H, Y = CH, Z = F und $R_3$ = H bedeuten.

4. Emulgierbare Konzentrate gemäß einem oder mehreren der Ansprüche 1 bis 3, dadurch gekennzeichnet, daß diese 2-4 Gew.-% anionaktiver Emulgator, 4-10 Gew.-% nichtionogener Emulgator und 2-20 Gew.-% Alkohol enthalten.

5. Emulgierbare Konzentrate gemäß einem oder mehreren der Ansprüche 1 bis 4, dadurch gekennzeichnet, daß diese 70 - 85 Gew.-% einer Verbindung der Formel I, 2,5 - 3,5 Gew.-% anionaktiver Emulgator, 6 - 8 Gew.-% nichtionogener Emulgator und 4 - 15 Gew. -% Alkohol enthalten.

6. Emulgierbare Konzentrate gemäß einem oder mehreren der Ansprüche 1 bis 5, dadurch gekennzeichnet, daß als anionaktiver Emulgator ein Alkali- oder Erdalkalisalz der Dodecylbenzolsulfonsäure, als nichtionogener Emulgator ein n-Butanol-Propylenoxid-Ethylenoxid-Blockoxalkylat und als Lösungsmittel ein ($C_4$-$C_{12}$)-Alkanol verwendet werden.

7. Emulgierbare Konzentrate gemäß einem oder mehreren der Ansprüche 1 bis 6, dadurch gekennzeichnet, daß als Lösungsmittel n-Hexanol verwendet wird.

8. Verfahren zur Bekämpfung von Schadinsekten oder Akariden, dadurch gekennzeichnet, daß man auf diese oder die von diesen befallenen Pflanzen, Flächen oder Substrate eine wirksame Menge eines emulgierbaren Konzentrates gemäß einem oder mehreren der Ansprüche 1 bis 7 appliziert.

9. Verwendung eines emulgierbaren Konzentrates gemäß einem oder mehreren der Ansprüche 1 bis 7 zur Bekämpfung von Schadinsekten oder Akariden.

**Patentansprüche für folgenden Vertragsstaat : ES**

1. Verfahren zur Herstellung emulgierbarer Konzentrate von Verbindungen der allgemeinen Formel I

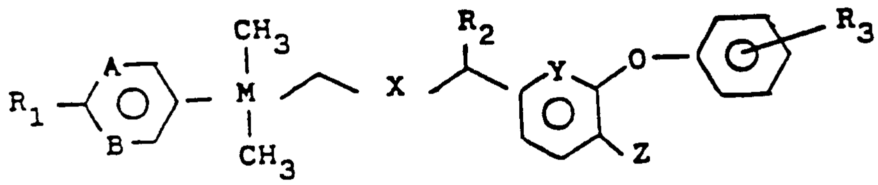

(I),

worin

| | | |
|---|---|---|
| A, B | = | unabhängig voneinander CH, $CR_4$, N, |
| X | = | $CH_2$, O, S, |
| Y | = | CH, N, |
| Z | = | H, F, |
| $R_1$,$R_4$ | = | unabhängig voneinander H, Halogen, ($C_1$-$C_3$)-Alkyl, ($C_1$-$C_3$)-Halogenalkyl, ($C_1$-$C_3$)-Alkoxy, ($C_1$-$C_3$)-Halogenalkoxy, ($C_1$-$C_4$)-Alkylthio, ($C_1$-$C_4$)-Halogenalkylthio oder $R_1$ und $R_4$ zusammen = $-CH_2-O-CH_2-$ ; |
| $R_2$ | = | H, ($C_1$-$C_3$)-Alkyl, Ethinyl, Vinyl, Halogen, Cyano, |
| $R_3$ | = | H, Halogen, ($C_1$-$C_4$)-Alkyl, ($C_1$-$C_3$)-Alkoxy und |
| M | = | C oder Si bedeuten, |

welche 60-90 Gew.-% einer Verbindung der Formel I und eine Kombination aus einem anionaktiven und einem nichtionogenen Emulgatoren mit einem ($C_2$-$C_{16}$)-Alkanol enthalten, dadurch gekennzeichnet, daß man die Ausgangskomponenten mischt.

2. Verfahren gemäß Anspruch 1, dadurch gekennzeichnet, daß in Formel I A, B = CH oder N, X = $CH_2$, $R_1$ = ($C_1$-$C_3$)-Alkoxy, $R_2$ = H, $R_3$ = H oder F und M = Si bedeuten.

3. Verfahren gemäß Anspruch 1 oder 2, dadurch gekennzeichnet, daß in Formel I M = Si, $R_1$ = Ethoxy, A,B = CH, X = $CH_2$, $R_2$ = H, Y = CH, Z = F und $R_3$ = H bedeuten.

4. Verfahren gemäß einem oder mehreren der Ansprüche 1 bis 3, dadurch gekennzeichnet, daß man Konzentrate herstellt, welche 2-4 Gew.-% anionaktiver Emulgator, 4-10 Gew.-% nichtionogener Emulgator und 2-20 Gew.-% Alkohol enthalten.

5. Verfahren gemäß einem oder mehreren der Ansprüche 1 bis 4, dadurch gekennzeichnet, daß man Konzentrate herstellt, welche 70-85 Gew.-% einer Verbindung der Formel I, 2,5-3,5 Gew.-% anionaktiver Emulgator, 6-8 Gew.-% nichtionogener Emulgator und 4-15 Gew.-% Alkohol enthalten.

6. Verfahren gemäß einem oder mehreren der Ansprüche 1 bis 5, dadurch gekennzeichnet, daß als anionaktiver Emulgator ein Alkali- oder Erdalkalisalz der Dodecylbenzolsulfonsäure, als nichtionogener Emulgator ein n-Butanol-Propylenoxid-Ethylenoxid-Blockoxalkylat und als Lösungsmittel ein ($C_4$-$C_{12}$)-Alkanol verwendet wird.

7. Verfahren gemäß einem oder mehreren der Ansprüche 1 bis 6, dadurch gekennzeichnet, daß als Lösungsmittel n-Hexanol verwendet wird.

8. Verfahren zur Bekämpfung von Schadinsekten oder Akariden, dadurch gekennzeichnet, daß man auf diese oder die von diesen befallenen Pflanzen, Flächen oder Substrate eine wirksame Menge eines emulgierbaren Konzentrates gemäß einem oder mehreren der Ansprüche 1 bis 7 appliziert.

9. Verwendung eines emulgierbaren Konzentrates gemäß einem oder mehreren der Ansprüche 1 bis 7 zur Bekämpfung von Schadinsekten oder Akariden.

**Claims**

**Claims for the following Contracting States : AT, BE, CH, DE, DK, FR, GB, GR, IT, LI, NL**

1. An emulsifiable concentrate of a compound of the formula I

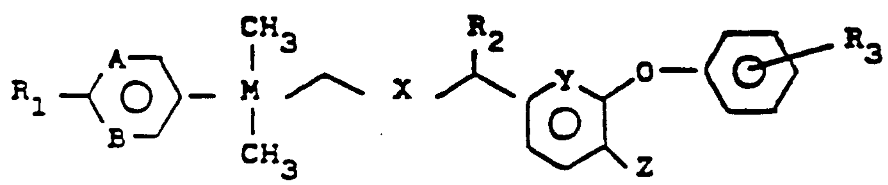

(I),

in which

| | |
|---|---|
| A, B | = independently of one another CH, $CR_4$ or N, |
| X | = $CH_2$, O or S, |
| Y | = CH or N, |
| Z | = H or F, |
| $R_1$ and $R_4$ | = independently of one another H, halogen, ($C_1$-$C_3$)-alkyl, ($C_1$-$C_3$)-haloalkyl, ($C_1$-$C_3$)-alkoxy, ($C_1$-$C_3$)-haloalkoxy, ($C_1$-$C_4$)-alkylthio or ($C_1$-$C_4$)-haloalkylthio, or $R_1$ and $R_4$ together = $-CH_2-O-CH_2-$; |
| $R_2$ | = H, ($C_1$-$C_3$)-alkyl, ethynyl, vinyl, halogen or cyano, |
| $R_3$ | = H, halogen, ($C_1$-$C_4$)-alkyl or ($C_1$-$C_3$)-alkoxy and |
| M | = C or Si, |

which contain 60 - 90% by weight of a compound of the formula I and a combination of an anionic and a nonionic emulsifier with a ($C_2$-$C_{16}$)-alkanol.

2. An emulsifiable concentrate as claimed in claim 1, wherein, in formula I, A and B = CH or N, X = $CH_2$, $R_1$ = ($C_1$-$C_3$)-alkoxy, $R_2$ = H, $R_3$ = H or F and M = Si.

3. An emulsifiable concentrate as claimed in claim 1 or 2, wherein, in formula I, M = Si, $R_1$ = ethoxy, A and B = CH, X = $CH_2$, $R_2$ = H, Y = CH, Z = F and $R_3$ = H.

4. An emulsifiable concentrate as claimed in one or more of claims 1 to 3, which contains 2-4% by weight of an anionic emulsifier, 4-10% by weight of a nonionic emulsifier and 2-20% by weight of an alcohol.

5. An emulsifiable concentrate as claimed in one or more of claims 1 to 4, which contains 70-85% by weight of a compound of the formula I, 2.5-3.5% by weight of an anionic emulsifier, 6-8% by weight of a nonionic emulsifier and 4-15% by weight of an alcohol.

6. An emulsifiable concentrate as claimed in one or more of claims 1 to 5, wherein an alkali metal salt or alkaline earth metal salt of dodecylbenzenesulfonic acid is used as the anionic emulsifier, an n-butanol-propylene oxide-ethylene oxide block oxyalkylate is used as the nonionic emulsifier and a ($C_4$-$C_{12}$)-alkanol is used as the solvent.

7. An emulsifiable concentrate as claimed in one or more of claims 1 to 6, wherein n-hexanol is used as the solvent.

8. A method of combating harmful insects or acarids, which comprises applying an active amount of an emulsifiable concentrate as claimed in one or more of claims 1 to 7 to these or to the plants, areas or substrates infested with these.

9. The use of an emulsifiable concentrate as claimed in one or more of claims 1 to 7 for combating harmful insects or acarids.

**Claims for the following Contracting State : ES**

1. A process for preparing an emulsifiable concentrate of a compound of the formula I

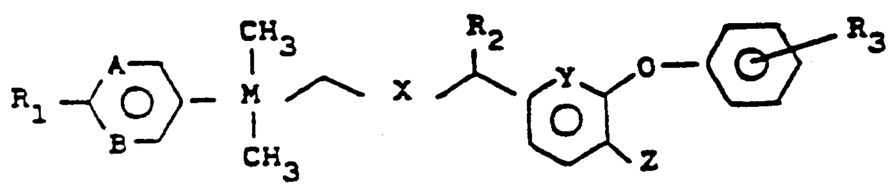
(I),

in which

| | |
|---|---|
| A, B | = independently of one another CH, $CR_4$ or N, |
| X | = $CH_2$, O or S, |
| Y | = CH or N, |
| Z | = H or F, |
| $R_1$ and $R_4$ | = independently of one another H, halogen, ($C_1$-$C_3$)-alkyl, ($C_1$-$C_3$)-haloalkyl, ($C_1$-$C_3$)-alkoxy, ($C_1$-$C_3$)-haloalkoxy, ($C_1$-$C_4$)-alkylthio or ($C_1$-$C_4$)-haloalkylthio, or $R_1$ and $R_4$ together = $-CH_2-O-CH_2-$; |
| $R_2$ | = H, ($C_1$-$C_3$)-alkyl, ethynyl, vinyl, halogen or cyano, |
| $R_3$ | = H, halogen, ($C_1$-$C_4$)-alkyl or ($C_1$-$C_3$)-alkoxy and |
| M | = C or Si, |

which contains 60-90% by weight of a compound of the formula I and a combination of an anionic and a nonionic emulsifier with a ($C_2$-$C_{16}$)-alkanol, which comprises mixing the starting components.

2. The process as claimed in claim 1, wherein, in formula I, A and B = CH or N, X = $CH_2$, $R_1$ = ($C_1$-$C_3$)-alkoxy, $R_2$ = H, $R_3$ = H or F and M = Si.

3. The process as claimed in claim 1 or 2, wherein, in formula I, M = Si, $R_1$ = ethoxy, A and B = CH, X = $CH_2$, $R_2$ = H, Y = CH, Z = F and $R_3$ = H.

4. The process as claimed in one or more of claims 1 to 3, which comprises preparing concentrates which contain 2-4% by weight of an anionic emulsifier, 4-10% by weight of a nonionic emulsifier and 2-20% by weight of an alcohol.

5. The process as claimed in one or more of claims 1 to 4, which comprises preparing concentrates which contain 70-85% by weight of a compound of the formula I, 2.5-3.5% by weight of an anionic emulsifier, 6-8% by weight of a nonionic emulsifier and 4-15% by weight of an alcohol.

6. The process as claimed in one or more of claims 1 to 5, wherein an alkali metal salt or alkaline earth metal salt of dodecylbenzenesulfonic acid is used as the anionic emulsifier, an n-butanol-propylene oxide-ethylene oxide block oxyalkylate is used as the nonionic emulsifier and a ($C_4$-$C_{12}$)-alkanol is used as the solvent.

7. The process as claimed in one or more of claims 1 to 6, wherein n-hexanol is used as the solvent.

8. A method of combating harmful insects or acarids, which comprises applying an active amount of an emulsifiable concentrate as in one or more of claims 1 to 7, to these or to the plants, areas or substrates infested with these.

9. The use of an emulsifiable concentrate as in one or more of claims 1 to 7 for combating harmful insects or acarids.

**Revendications**

**Revendications pour les Etats contractants suivants : AT, BE, CH, DE, DK, FR, GB, GR, IT, LI, NL**

1. Concentré émulsionnable des composés de formule générale I

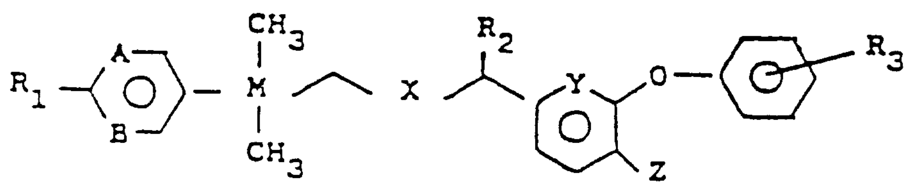

(I),

dans laquelle

A, B = indépendamment l'un de l'autre représentent CH, $CR_4$, N,
X = $CH_2$, O, S,
Y = CH, N
Z = H, F
$R_1$, $R_4$ = indépendamment l'un de l'autre représentent H, les halogènes, alkyle en ($C_1$-$C_3$), halogénoalkyle en ($C_1$-$C_3$), alcoxy en ($C_1$-$C_3$), halogénoalcoxy en ($C_1$-$C_3$), alkylthio en ($C_1$-$C_4$), halogénoalkylthio en ($C_1$-$C_4$), ou $R_1$ et $R_4$ ensemble = $-CH_2-O-CH_2-$ ;
$R_2$ = H, alkyle en ($C_1$-$C_3$), éthynyle, vinyle, halogène, cyano,
$R_3$ = H, halogène, alkyle en ($C_1$-$C_4$), alcoxy en ($C_1$-$C_3$) et
M = C ou Si,

caractérisés en ce qu'ils contiennent 60 à 90 % en poids d'un composé de formule (I) et une combinaison d'un émulsifiant anionique et d'un émulsifiant non ionogène avec un alcanol en ($C_2$-$C_{16}$).

2. Concentrés émulsionnables selon la revendication 1, caractérisés en ce que dans la formule I A, B = CH ou N, X = $CH_2$, $R_1$ = alcoxy en ($C_1$-$C_3$), $R_2$ = H, $R_3$ = H ou F et M = Si.

3. Concentrés émulsionnables selon la revendication 1 ou 2, caractérisés en ce que dans la formule (I) M = Si, $R_1$ = éthoxy, A, B = CH, X = $CH_2$, $R_2$ = H, Y = CH, Z = F et $R_3$ = H.

4. Concentrés émulsionnables selon une ou plusieurs des revendications 1 à 3, caractérisés en ce qu'ils contiennent de 2 à 4 % en poids d'émulsifiant anionique, de 4 à 10 % en poids d'émulsifiant non ionogène et de 2 à 20 % en poids d'alcool.

5. Concentrés émulsionnables selon une ou plusieurs des revendications 1 à 4, caractérisés en ce qu'ils contiennent de 70 à 85 % en poids d'un composé de formule I, de 2,5 à 3,5 % en poids d'émulsifiant

anionique, de 6 à 8 % en poids d'émulsifiant non ionogène et de 4 à 15 % en poids d'alcool.

6. Concentrés émulsionnables selon une ou plusieurs des revendications 1 à 5, caractérisés en ce qu'on utilise en tant qu'émulsifiant anionique un sel alcalin ou alcalino-terreux d'acide dodécylbenzènesulfonique en tant qu'émulsifiant non ionogène un alcoxylate séquencé de n-butanol-oxyde de propylène-oxyde d'éthylène et en tant que solvant un alcanol en $C_4$-$C_{12}$.

7. Concentrés émulsionnables selon une ou plusieurs des revendications 1 à 6, caractérisés en ce qu'on utilise en tant que solvant le n-hexanol.

8. Procédé pour la lutte contre les insectes nuisibles ou les acariens, caractérisé en ce qu'on applique sur les plantes, surfaces ou substrats envahis par ceux-ci, une quantité efficace de concentré émulsionnable selon une ou plusieurs des revendications 1 à 7.

9. Utilisation d'un concentré émulsionnable selon une ou plusieurs des revendications 1 à 7 pour la lutte contre les insectes nuisibles ou acariens.

**Revendications pour l'Etat contractant suivant : ES**

1. Procédé pour la préparation de concentrés émulsionnables des composés de formule générale I

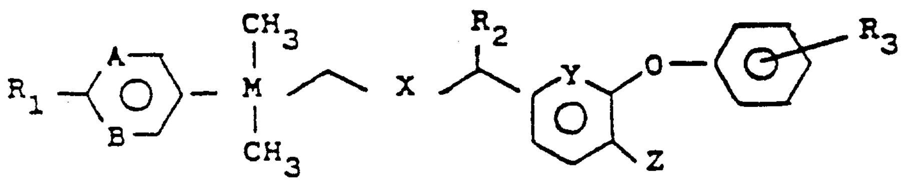

(I),

dans laquelle

A, B = indépendamment l'un de l'autre représentent CH, $CR_4$, N,
X = $CH_2$, O, S,
Y = CH, N
Z = H, F
$R_1$, $R_4$ = indépendamment l'un de l'autre représentent H, les halogènes, alkyle en ($C_1$-$C_3$), halogénoalkyle en ($C_1$-$C_3$), alcoxy en ($C_1$-$C_3$), halogénoalcoxy en ($C_1$-$C_3$), alkylthio en ($C_1$-$C_4$), halogénoalkylthio en ($C_1$-$C_4$), ou $R_1$ et $R_4$ ensemble = $-CH_2-O-CH_2-$ ;
$R_2$ = H, alkyle en ($C_1$-$C_3$), éthynyle, vinyle, halogène, cyano,
$R_3$ = H, halogène, alkyle en ($C_1$-$C_4$), alcoxy en ($C_1$-$C_3$) et
M = C ou Si,

caractérisés en ce qu'ils contiennent 60 à 90 % en poids d'un composé de formule (I) et une combinaison d'un émulsifiant anionique et d'un émulsifiant non ionogène avec un alcanol en ($C_2$-$C_{16}$), caractérisé en ce qu'on mélange les composants de départ.

2. Procédé selon la revendication 1, caractérisé en ce que dans la formule I A, B = CH ou N, X = $CH_2$, $R_1$ = alcoxy en ($C_1$-$C_3$), $R_2$ = H, $R_3$ = H ou F et M = Si.

3. Procédé selon la revendication 1 ou 2, caractérisé en ce que dans la formule (I) M = Si, $R_1$ = éthoxy, A, B = CH, X = $CH_2$, $R_2$ = H, Y = CH, Z = F et $R_3$ = H.

4. Procédé selon une ou plusieurs des revendications 1 à 3, caractérisé en ce qu'on prépare des concentrés qui contiennent de 2 à 4 % en poids d'émulsifiant anionique, de 4 à 10 % en poids d'émulsifiant non ionogène et de 2 à 20 % en poids d'alcool.

5. Procédé selon une ou plusieurs des revendications 1 à 4, caractérisé en ce qu'on prépare des concentrés qui contiennent de 70 à 85 % en poids d'un composé de formule I, de 2,5 à 3,5 % en poids d'émulsifiant anionique, de 6 à 8 % en poids d'émulsifiant non ionogène et de 4 à 15 % en poids d'alcool.

6. Procédé selon une ou plusieurs des revendications 1 à 5, caractérisé en ce qu'on utilise en tant qu'émulsifiant anionique un sel de métal alcalin ou alcalino-terreux de l'acide dodécylbenzènesulfonique, en tant qu'émulsifiant non ionogène un alcoxylate séquencé de n-butanol-oxyde de propylène-oxyde d'éthylène et en tant que solvant un alcanol en ($C_4$-$C_{12}$).

7. Procédé selon une ou plusieurs des revendications 1 à 6, caractérisé en ce qu'on utilise en tant que solvant le n-hexanol.

8. Procédé pour la lutte contre les insectes nuisibles ou acariens, caractérisé en ce qu'on applique sur les plantes, surfaces ou substrats envahis par ceux-ci une quantité efficace d'un concentré émulsionnable selon une ou plusieurs des revendications 1 à 7.

9. Utilisation d'un concentré émulsionnable selon une ou plusieurs des revendications 1 à 7 pour la lutte contre les insectes nuisibles ou acariens.